# EUROPEAN PATENT SPECIFICATION

(11) **EP 3 120 500 B1**
(45) Date of publication and mention of the grant of the patent: **29.05.2019**
(21) Application number: 14711231.2
(22) Date of filing: 17.03.2014
(51) Int. Cl.: H04L 12/26, H04L 12/14

(54) **APPLICATION-AWARE DATA CHARGING**
ANWENDUNGSBEWUSSTES LADEN VON DATEN
CHARGEMENT DE DONNÉES COMPATIBLES AVEC UNE APPLICATION

(43) Date of publication of application: 25.01.2017
(73) Proprietor: Telefonaktiebolaget LM Ericsson (publ), 164 83 Stockholm (SE)
(72) Inventor: KÖLHI, Johan, S-16480 Stockholm (SE); DAI, Ken, Guangzhou 510630 (CN); BARRETT, Niamh, S-16480 Stockholm (SE); HERBER, Thorsten, S-16480 Stockholm (SE)
(74) Representative: Brann AB
(86) International application number: PCT/EP2014/055343
(87) International publication number: WO 2015/139727

(56) References cited:
- WO-A1-2007/002577
- WO-A1-2014/029088
- WO-A2-02/37870
- US-A1- 2002 105 911
- US-A1- 2010 250 414

## Description

### Technical field

The present application relates to a method in a node of a communications network, a node in a communications network, an apparatus for charging network traffic, and a computer-readable medium.

### Background

With the increased use of personal communications devices such as smart phones, tablets, laptops, and portable WiFi hotspots to name but a few, there is a surge in mobile data traffic. Operators of the networks to which these devices connect determine how to charge data traffic via basic charging rules.

The Open Systems Interconnection (OSI) model (ISO/IEC 7498-1) is a conceptual model that characterizes and standardizes the internal functions of a communication system by partitioning it into abstraction layers. The model separates communication functions into one of seven logical layers. Each layer interacts directly only with the layer immediately beneath it, and provided facilities for use by the layer above it. In this model there are seven layers. At the bottom is layer 1, the physical layer. Layer 2 is the data link layer. Layer 3 is the network layer. Layers 1 to 3 are media layers. Layer 4 is the transport layer. Layer 5 is the session layer. Layer 6 is the Presentation layer. Layer 7 is the Application layer. Layers 4 to 7 are the host layers.

In a wireless communications network, charging is based merely on the amount of traffic carried over the network. This determination is made in the network layer (layer 3). This is because charging is based upon the volume of data transported at the network layer, as reported by the Gateway (GGSN/PGW). This volume is known at layer 3 but is not apparent to the other layers.

As usage of communications networks evolves, the need arises for more complex charging schemes. Charging can be based upon the services used, so the network traffic generated by different applications can be charged differently. However, in known systems this is done by performing an offline correlation of services and network traffic. This requires potentially sensitive information to be transmitted and stored within the network. This not only increases the burden on network resources, but also increases the risk of the security of such information being compromised.

WO 02/37870 discloses a mechanism for coordinating charging for a multimedia session between a mobile terminal and a remote host on both an application/session level and on an IP/access bearer level. A token associated with the multimedia session is generated and used to correlate session charges for operations performed in a packet-switched access network and for operations performed in a multimedia system.

US 2002/0105911 discloses a method for monitoring data on a first communication line. Data is received from the first communication line and a plurality of packets are extracted from the data. Statistics are then recursively generated, the statistics corresponding to the plurality of packets.

### Summary

Although application data is carried through packets in the network layer, the network layer is not able to determine the content of the packets - such activity is the preserve of the host layers. Thus, in order for data charging by application or by service to be implemented, the packet information in the network layer must be tied to the application level payloads in a host layer.

Accordingly there is provided a method in a node of a communications network, the method comprising logging packet information for network traffic related to a client, the packet information including TCP4-tuples, start TCP sequence, and the length of each packet. The method further comprises sending the logged packet information for the network traffic related to the client from a network layer to a host layer within the node, the host layer comprising one of: a transport layer, a session layer, a presentation layer, and an application layer. The method further comprises identifying application level payloads for the network traffic related to the client at a host layer within the node. The method further still comprises correlating the packet information with the application level payloads for network traffic related to the client, such that services in a host layer that packets in the network traffic are servicing may be determined.

The network layer handles the packets of application data but has no way of reading the contents; that is done in a host layer. By passing the packet information from the network layer to a host layer, a host layer in the node then has access to both packet information and application level payload information, which allows for correlation of the packet information for network traffic with application level payloads for the client. This correlation allows for the determination of which services in a host layer the packets in the network traffic are servicing. This allows network traffic to be charged according to the application that generated it.

The method may further comprise checking with a charging system before allowing data to pass to or from the client. The method may further comprise passing the correlation result to a charging system. The charging system may be arranged to determine if there is sufficient credit or allowance remaining for the data to be carried. The method may further comprise charging a user account registered to the client for the network traffic according to the application level payloads carried by the network traffic.

There is further provided a node in a communications network. The node is arranged to operate as a gateway between a client and the internet. The node logs packet information for network traffic related to the client, the packet information including TCP4-tuples, start TCP sequence, and the length of each packet, and transfers the logged packet information for the network traffic related to the client from a network layer to a host layer within the node, the host layer comprising one of: a transport layer, a session layer, a presentation layer, and an application layer. The node identifies application level payloads for the network traffic related to the client at a host layer within the node; and correlates network packet data with application level payloads initiated by the client, such that services in the host layer that packets in the network traffic are servicing may be determined.

The node may, instead of operating as a gateway between a client and the internet, alternatively operate as a reverse proxy between a server and at least one client. The following optional features equally apply to either embodiment.

The logged packet information may be processed in a host layer of the node, said processing comprising sorting packet information suitable for correlating with the application level payloads.

The node may further comprise a traffic detection entity to identify the application level payloads in the network traffic related to the client. The traffic detection entity may query a charging entity to determine if there is sufficient credit or allowance remaining at a user account associated with the client before allowing data for the client to pass. The traffic detection entity may hold the network traffic for the client and send a request to an online charging system (OCS). The OCS may return a remaining data quota back to the traffic detection entity. If the OCS responds with zero quota then network traffic for the client is blocked.

The node may pass the correlation result to a charging system. The charging system may be an online charging system (OCS). The node may further comprise triggering a charge item to be recorded against the user account registered to the client, the charge item corresponding to the volume of network traffic related to the client and what application level payloads that network traffic carried.

### Brief description of the drawings

An improved data charging system in a communications network will now be described, by way of example only, with reference to the accompanying drawings, in which:
Figure 1 illustrates a system for the collection of network layer resource usage for service charging at a node that handles traffic for a client;
Figure 2 illustrates a method performed by the embodiment shown in figure 1;
Figure 3 illustrates an alternative embodiment of a method performed in a node of a communications network;
Figure 4 illustrates a gateway in a communications network; and
Figure 5 illustrates a node for charging network traffic.

### Detailed description

Although application data is carried through packets in the network layer, the network layer is not able to determine the content of the packets - such activity is the preserve of the host layers. Thus, in order for data charging by application to be implemented, the packet information in the network layer must be tied to the application level payloads in a host layer.

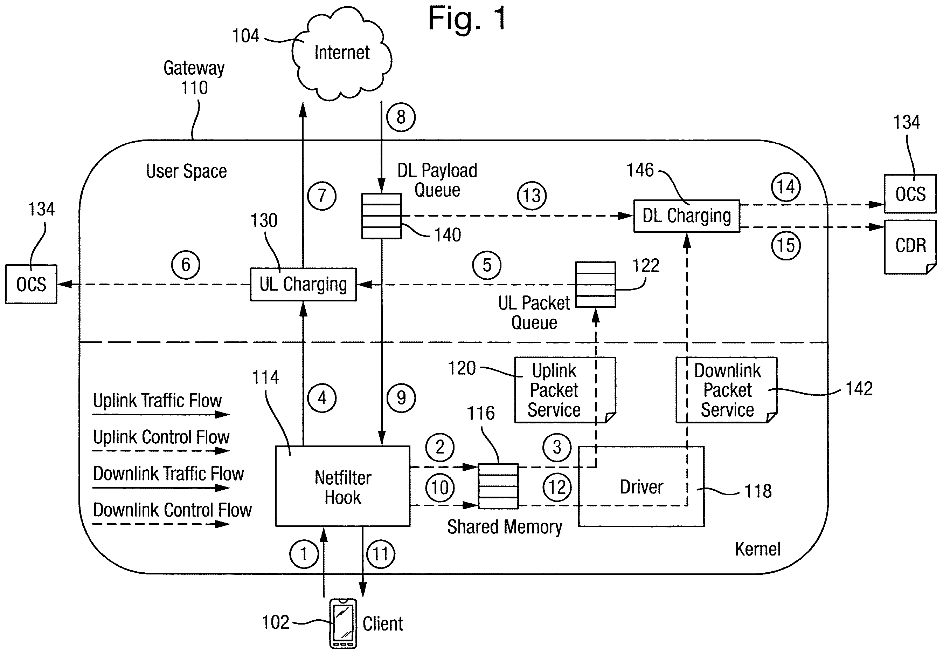

Figure 1 illustrates a system for the collection of network layer resource usage for 'service' charging at a node that handles traffic for the client. A 'service' is any process that uses a data connection through the network infrastructure. Examples of such 'services' are: client applications, accessing websites, content streaming and/or downloading etc.

Figure 1 shows a gateway 110 which provides a connection between a client 102 and the internet 104. Gateway 110 is illustrated divided into: a user space which resides in the host layers of the node; and the Kernel, which is a network layer of the node. In practice gateway 110 would likely comprise many more components and layers.

Gateway 110 comprises a Netfilter Hook 114, which is a hook for intercepting packets belonging to a request/response. It logs packet information into a shared memory 116.

Gateway 110 further comprises a Driver 118. The driver 118 is for 'read only' character devices, one each for uplink device and downlink device. When the user space process reads from this device, the Driver 118 copies the packet information into user space and subsequently removes it from kernel memory.

Character special files or character devices relate to devices through which the system transmits data one character at a time by, for example, getchar. These device modules often serve fore stream communication with devices such as mice, keyboards, virtual terminals, and serial modems, and usually do not support random access to data. In most implementations, character devices use unbuffered input and output routines. The system reads each character from the device immediately or writes each character to the device immediately.

Gateway 110 further comprises an uplink packet queue 122 and a downlink payload queue 140. The uplink packet queue is a connection level queue which stores packet information from the Driver prior to the charging process. The downlink payload queue 140 is a FIFO queue which stores the 'uncharged' payload in order. Entries in the downlink payload queue 140 are removed after the payload is charged.

In operation, the system works as follows.
1. The client 102 sends an HTTP request via the gateway 110. The Netfilter Hook 114 intercepts all packets belonging to the request.
2. The Netfilter Hook 114 logs packet information into shared memory 116. The logged packet information includes TCP4-tuples, start TCP sequence and the length of each packet.
3. A process in user space uses an uplink packet device 120 to access and read the packet logs and saves these into the Uplink Packet Queue 122. The kernel provides services to the user space and so these packet logs cannot be pushed into user space by the driver 118.
4. The Netfilter Hook 114 sends the uplink packets received from the client 102 to an uplink charging entity 130 in the user space.
5. The uplink charging entity 130 reads from the Uplink Packet Queue 122 and calculates the network layer usage by counting the number of packets used for this request.
6. The uplink charging entity 130 identifies the service type (or simply the pricing group) based on the requested URL and other user-specific information such as MSISDN, user category, etc. If required, a credit control request is sent to the Online Charging System (OCS) 134.
7. The uplink request is forwarded to the internet.
8. The response is received from the internet, and the payload of the response is saved to the downlink Payload Queue 140.
9. The Netfilter Hook 114 intercepts all packets belonging to the response.
10. All packet information belonging to the response is logged into the Shared Memory 116. The packet information includes TCP4-tuples, start TCP sequence and the length of each packet.
11. The response is sent to the client 102.
12. The user space process reads the logs from the Downlink Packet Device 142.
13. A downlink charging entity 146 correlates the packet logs from the netfilter hook 114 with the payload in downlink Payload Queue 140 using the TCP sequences.
14. The downlink charging entity 146 identifies the service type (or simply the pricing group) based on the request URL and other user-specific information such as MSISDN, user category, etc. If needed, a credit control request is sent to OCS 134.
15. The uplink and downlink network layer usage and corresponding Rating Group of the transaction is written to a call detail record (CDR).

Calculating the service type for a downlink response may be trickier than for the uplink request as there is no URL in the HTTP response. However, the request URL is remembered when the user space process handles the request, and this can be used in identifying the service type of the response. Still, in the absence of such mapping, there remains important information within the response, such as 'Content-Type' which indicates the content is image or video, and this can also be used as input into the charging rules.

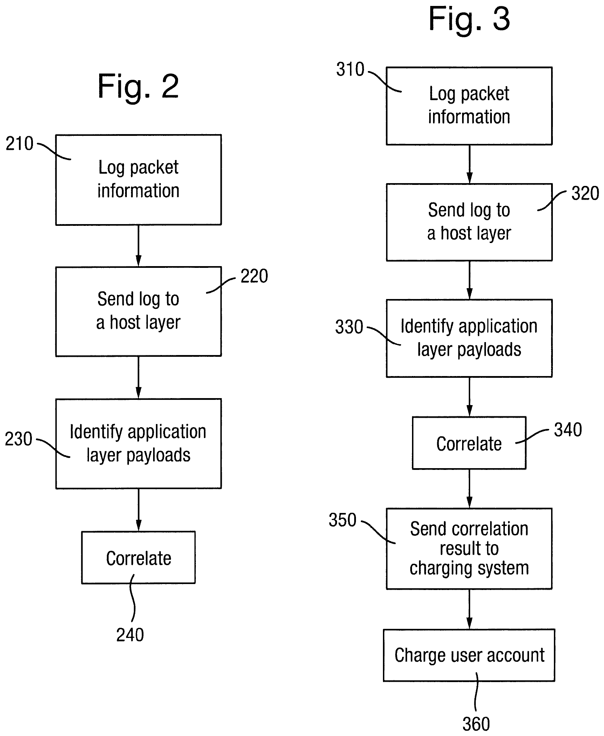

Figure 2 illustrates a summary of the method performed by the embodiment shown in figure 1. The method is performed in a node of a communications network. The node is most likely a gateway maintained by the network operator, but could well be another node in a communication network. The method comprises logging 210 packet information for network traffic related to a client, and sending 220 the logged packet information from a network layer to a host layer within the node. The method further comprises identifying 230 application level payloads for network traffic related to the client at a host layer within the node, and correlating 240 the packet information with the application level payloads for network traffic related to the client.

The network layer handles the packets of application data but has no way of reading the contents. The contents of the packets could be accessed by deep packet inspection, but this requires a lot of processing power and/or additional network resources. The content of the packets, and thus their application level payload information, is already available in a host layer. By passing the packet information from the network layer to a host layer, the host layer then has access to both packet information and application level payload information. This allows the node to efficiently perform correlation of the packet information for network traffic with application level payloads for the client, and so the node can determine which services in the host layer the packets in the network traffic are servicing. This allows network traffic to be charged according to the application that generated it. Further, this correlation is carried out by the node handling the traffic without using additional processing resources in other parts of the network.

A benefit of this process is that neither the packet information nor the application level payload information needs to leave the node for correlation. Obviously, the application level payload leaves the node in the packets that are transmitted and received, but the information about this communication, the metadata, does not need to leave the node. Compared to known methods, the described process is thus more efficient in terms of intra-network communication, and is also likely to have fewer security vulnerabilities.

Figure 3 illustrates an alternative embodiment of the method performed in a node of a communications network and described herein. The method comprises logging 310 packet information for network traffic related to a client, and sending 320 the logged packet information from a network layer to a host layer within the node. Application layer payloads for network traffic related to the client are identified 330 at a host layer within the node, and the packet information is correlated 340 with the application level payloads for network traffic related to the client. The correlation result is sent 350 to a charging system 134.

Where the client being served uses a pre-pay service, the charging system 134 may implement a credit control procedure. Here, the method further comprises checking with the charging system 134 that there is sufficient credit on the associated user account before allowing data to pass to or from the client 102.

Where the client being served is associated with a user account that pays in arrears, a charge is recorded 360 on the appropriate user account registered to the client for the network traffic according to what application level payloads the network traffic carried.

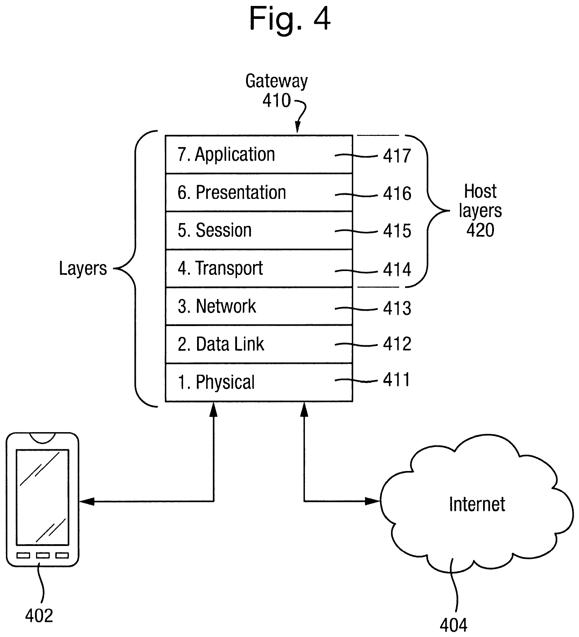

Figure 4 illustrates a gateway 410 in a communications network, the gateway 410 for implementing the methods described herein. The gateway 410 handles communications between a client device 402 and the internet 404. The gateway 410 comprises a layer system consistent with the Open Systems Interconnection (OSI) model (ISO/IEC 7498-1). This is a conceptual model that characterizes and standardizes the internal functions of a communication system by partitioning it into abstraction layers. The model separates communication functions into one of seven logical layers. Each layer interacts directly only with the layer immediately beneath it, and provided facilities for use by the layer above it. In this model there are seven layers that are implemented in gateway 410. At the bottom is layer 1, the physical layer 411. Layer 2 is the data link layer 412. Layer 3 is the network layer 413. Layers 1 to 3 are media layers. Layer 4 is the transport layer 414. Layer 5 is the session layer 415. Layer 6 is the Presentation layer 416. Layer 7 is the Application layer 417. Layers 4 to 7 are the host layers 420.

In operation, the gateway 410 is arranged to log packet information for network traffic related to a client, and transfers the logged packet information for network traffic related to the client from the network layer 413 to an application layer 417 within the node. The node identifies application level payloads for network traffic related to the client in one of the host layers 420 within the node; and correlates network packet data with application level payloads initiated by the client.

The node 410 may, instead of operating as a gateway between a client and the internet, alternatively operate as a reverse proxy between a server and at least one client. The optional features described herein equally apply to either embodiment.

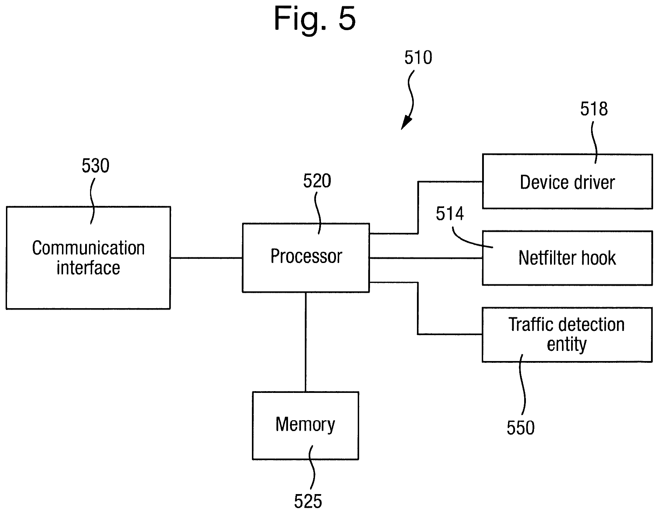

Figure 5 illustrates a node 510 for charging network traffic comprising processing circuitry 520 and a memory 525, said memory containing instructions executable by said processing circuitry 520 whereby said apparatus is operative to perform a method described herein.

Node 510 further comprises a communication interface 530 for sending and receiving communications between at least one client and the internet.

The node 510 may further comprise a device driver 518 that exchanges packet logs between kernel memory and application memory. The node may further comprise a netfilter hook 514 to log packet information for client traffic. The netfilter hook 514 may reside in a network layer of the node. The packet information may be logged into a kernel portion of shared memory 525. The logged packet information may comprise SYN messages and ACK messages.

The logged packet information may be processed in the host layers of the node 510, said processing comprising sorting packet information suitable for correlating with application level payloads.

The node 510 may further comprise a traffic detection entity 550 to identify application level payloads in network traffic related to the client. The traffic detection entity 550 may query a charging entity to determine if there is sufficient credit or allowance remaining at a user account associated with the client before allowing data for the client to pass. The traffic detection entity 550 may hold the network traffic for the client and send a request to an online charging system (OCS). The OCS may return a remaining data quota back to the traffic detection entity 550. If the OCS responds with zero quota then network traffic for the client is blocked. The node 510 may further trigger a charge item to be recorded against a user account registered to the client, the charge item corresponding to the volume of network traffic related to the client and what application level payloads that network traffic carried.

There is further provided an apparatus for charging network traffic comprising processing circuitry and a memory, said memory containing instructions executable by said processing circuitry whereby said apparatus comprises a module for logging packet information for network traffic related to a client and for transferring the logged packet information for network traffic related to the client from a network layer to an host layer within the apparatus. Said apparatus further comprises a module for identifying application level payloads for network traffic related to the client at a host layer within the apparatus. Said apparatus further still comprising a module for correlating network packet data with application level payloads initiated by the client.

There is further provided a computer-readable medium, carrying instructions, which, when executed by computer logic, causes said computer logic to carry out any of the methods defined herein.

There is further provided a computer-readable storage medium, storing instructions, which, when executed by computer logic, causes said computer logic to carry out any of the methods defined herein. The computer program product may be in the form of a non-volatile memory or volatile memory, e.g. an EEPROM (Electrically Erasable Programmable Read-only Memory), a flash memory, a disk drive or a RAM (Random-access memory).

The methods and apparatus described herein may be used to support one or more of the following features.
- Calculating network layer resource usage using Layer 4-7 network awareness.
- Calculating network layer resource usage based on any of IP flow (IP5tuple), application type, URL, content etc.; on uplink and/or downlink or both simultaneously.
- Performing such calculations online, without later data reconciliation.
- Identify 'service' (type) for any TCP-based traffic.
- Calculating network layer resource usage in both uplink and downlink for each 'service' type.
- Reporting the network layer resource usage by type.
- Application of differentiated charging of services.
- Charging for network resource usage at 'service' level.

Further, the methods and apparatus described herein may be used by a network operator to offer services to particular Content Providers. Such services may comprise: free customer access to network resources for access to particular content; differentiated network capabilities (such as bandwidth/QoS, targeted advertising etc.); and/or connections to premium content.

It will be apparent to the skilled person that the exact order and content of the actions carried out in the method described herein may be altered according to the requirements of a particular set of execution parameters. Accordingly, the order in which actions are described and/or claimed is not to be construed as a strict limitation on order in which actions are to be performed.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope

The application level payload data relates to information in any of the host layers, that is layers 4 to 7 (the transport layer, the session layer, the presentation layer and the application layer). In so far as the packet information that is sent from the network layer to a host layer is information about the packets, this comprises packet metadata. Similarly, the application level payload information used for correlation may comprise data about the application level payload, or application level payload metadata. Thus the correlation performed in the host layer may comprise a correlation between the packet metadata and the application level payload metadata.

According to the definition of the OSI model used herein, where a node accesses the application level payload of a communication, that communication has moved into a host layer of the node. That is, a layer of the node is defined by the information layer of the communication that is being accessed.

The client may be a client device such as a user apparatus. The client device may be any kind of personal computer such as a television, a smart television, a set-top box, a games-console, a home-theatre personal computer, a tablet, a smartphone, a laptop, or even a desktop PC. The client may be a wireless device, or connected to a network via a cable. The network traffic or packet information that is correlated with application level payloads may comprise a correlation result. An application level payload may be a service payload. Network traffic related to a client may comprise network traffic to and/or from the client.

While examples have been given in the context of the HTTP communication protocol, these examples are not intended to be the limit of the communication protocols to which the disclosed method and apparatus may be applied. The principles disclosed herein can be applied to any communication protocol used in a communications network which carries data to and from a client device

Further, while examples have been given in the context of a particular communications network, these examples are not intended to be the limit of the communications networks to which the disclosed method and apparatus may be applied. The principles disclosed herein can be applied to any communications network which carries data to and from a client device, including both wired IP networks and wireless communications networks such as LTE and 3G networks.

## Claims

1. A method in a node of a communications network, the method comprising:
logging (210) packet information for network traffic related to a client, the packet information including TCP4-tuples, start TCP sequence, and length of each packet;
sending (220) the logged packet information for the network traffic related to the client from a network layer (413) to a host layer (420) within the node, the host layer comprising one of: a transport layer (414), a session layer (415), a presentation layer (416), and an application layer (417);
identifying (230) application level payloads for the network traffic related to the client at the host layer within the node; and
correlating (240) the packet information with the application level payloads for network traffic related to the client, such that services in a host layer that packets in the network traffic are servicing may be determined.

2. The method of claim 1, further comprising checking with a charging system before allowing data to pass to or from the client.

3. The method of any preceding claim, further comprising passing (350) the correlation result to a charging system.

4. The method of any preceding claim, further comprising charging (360) a user account registered to the client for the network traffic according to what application level payloads the network traffic carried.

5. A node (510) in a communications network, the node (510) arranged to:
operate as a gateway between a client and the internet (404);
log packet information for network traffic related to the client, the packet information including TCP4-tuples, start TCP sequence, and the length of each packet;
transfer the logged packet information for the network traffic related to the client from a network layer (413) to a host layer (420) within the node (510), the host layer (420) comprising one of: a transport layer (414), a session layer (415), a presentation layer (416), and an application layer (417);
identify application level payloads for the network traffic related to the client at the host layer (420) within the node (510); and
correlate network packet data with application level payloads initiated by the client, such that services in the host layer (420) that packets in the network traffic are servicing may be determined.

6. The node (510) of claim 5, further comprising a netfilter hook (514) to log packet information for client traffic.

7. The node (510) of claim 6, wherein the logged packet information is processed in the host layer (420) of the node (510), said processing comprising sorting packet information suitable for correlating with the application level payloads.

8. The node (510) of any of claims 5 to 7, further comprising a traffic detection entity (550) to identify the application level payloads in the network traffic related to the client.

9. The node (510) of claim 8, wherein the traffic detection entity (550) queries a charging entity to determine if there is sufficient credit or allowance remaining at a user account associated with the client before allowing data for the client to pass.

10. The node (510) of any of claims 5 to 9, further comprising passing the correlation result to a charging system.

11. The node (510) of any claims 5 to 10, further comprising triggering a charge item to be recorded against the user account registered to the client, the charge item corresponding to the volume of network traffic related to the client and what application level payloads that network traffic carried.

## Patentansprüche

1. Verfahren in einem Knoten eines Kommunikationsnetzwerks, wobei das Verfahren Folgendes umfasst:
Aufzeichnen (210) von Paketinformationen für Netzwerkverkehr, der mit einem Client zusammenhängt, wobei die Paketinformationen TCP4-Tupel, Start-TCP-Sequenz und Länge von jedem Paket beinhalten;
Senden (220) der aufgezeichneten Paketinformationen für den Netzwerkverkehr, der mit dem Client zusammenhängt, von einer Netzwerkschicht (413) zu einer Hostschicht (420) innerhalb des Knotens, wobei die Hostschicht eine der Folgenden umfasst: eine Transportschicht (414), eine Sitzungsschicht (415), eine Darstellungsschicht (416) und eine Anwendungsschicht (417);
Identifizieren (230) der Nutzdaten der Anwendungsebene für den Netzwerkverkehr, der mit dem Client zusammenhängt, an der Hostschicht innerhalb des Knotens; und
Korrelieren (240) der Paketinformationen mit den Nutzdaten der Anwendungsebene für Netzwerkverkehr, der mit dem Client zusammenhängt, sodass diese Dienste in einer Hostschicht, die Pakete in dem Netzwerkverkehr bedienen, bestimmt werden können.

2. Verfahren nach Anspruch 1, das ferner Nachfragen bei einem Ladesystem umfasst, bevor den Daten erlaubt wird, zu oder von dem Client weiter geleitet zu werden.

3. Verfahren nach einem der vorhergehenden Ansprüche, das ferner Leiten (350) des Korrelationsergebnisses zu einem Ladesystem umfasst.

4. Verfahren nach einem der vorhergehenden Ansprüche, das ferner Laden (360) eines Benutzerkontos umfasst, das an dem Client gemäß den Nutzdaten für Anwendungsebenen, die durch den Netzwerkverkehr getragen wurden, für den Netzwerkverkehr registriert ist.

5. Knoten (510) in einem Kommunikationsnetzwerk, wobei der Knoten (510) zu Folgendem angeordnet ist:
Betreiben als ein Gateway zwischen dem Client und dem Internet (404);
Aufzeichnen von Paketinformationen für Netzwerkverkehr, der mit dem Client zusammenhängt, wobei die Paketinformationen TCP4-Tupel, Start-TCP-Sequenz und die Länge von jedem Paket beinhalten;
Übertragen der aufgezeichneten Paketinformationen für den Netzwerkverkehr, der mit dem Client zusammenhängt, von einer Netzwerkschicht (413) zu einer Hostschicht (420) innerhalb des Knotens (510), wobei die Hostschicht (420) eine der Folgenden umfasst: eine Transportschicht (414), eine Sitzungsschicht (415), eine Darstellungsschicht (416) und eine Anwendungsschicht (417);
Identifizieren von Nutzdaten der Anwendungsebene für den Netzwerkverkehr, der mit dem Client zusammenhängt, an der Hostschicht (420) innerhalb des Knotens (510); und
Korrelieren von Netzwerkpaketdaten mit Nutzdaten der Anwendungsebene, die durch den Client eingeleitet wurden, sodass Dienste in der Hostschicht (420), die Pakete in dem Netzwerkverkehr bedienen, bestimmt werden können.

6. Knoten (510) nach Anspruch 5, der ferner einen Netzfilterhaken (514) umfasst, um Paketinformationen für Clientverkehr aufzuzeichnen.

7. Knoten (510) nach Anspruch 6, wobei die aufgezeichneten Paketinformationen in der Hostschicht (420) des Knotens (510) verarbeitet werden, wobei das Verarbeiten Sortieren der Paketinformationen umfasst, die zum Korrelieren mit den Nutzdaten der Anwendungsebene geeignet sind.

8. Knoten (510) nach einem der Ansprüche 5 bis 7, der ferner eine Verkehrsdetektionseinheit (550) umfasst, um die Nutzdaten der Anwendungsebene in dem Netzwerkverkehr zu identifizieren, der mit dem Client zusammenhängt.

9. Knoten (510) nach Anspruch 8, wobei die Verkehrsdetektionseinheit (550) eine Ladeeinheit anfragt, um zu bestimmen, ob es ein(e) ausreichende(s) Gutschrift oder Recht an einem Benutzerkonto gibt, das mit dem Client zusammenhängt, bevor Daten für den Client erlaubt wird, weiter geleitet zu werden.

10. Knoten (510) nach einem der Ansprüche 5 bis 9, der ferner Leiten des Korrelationsergebnisses zu einem Ladesystem umfasst.

11. Knoten (510) nach einem der Ansprüche 5 bis 10, der ferner Auslösen eines Ladeobjekts umfasst, das in Bezug auf das Benutzerkonto erfasst werden soll, das an dem Client registriert ist, wobei das Ladeobjekt dem Volumen von Netzwerkverkehr entspricht, der mit dem Client und den Nutzdaten der Anwendungsebene, die der Netzwerkverkehr getragen hat, zusammenhängt.

## Revendications

1. Procédé dans un noeud d'un réseau de communication, le procédé comprenant :
l'enregistrement (210) d'informations de paquet pour le trafic réseau lié à un client, les informations de paquet comportant des tuples TCP4, une séquence de démarrage TCP et la longueur de chaque paquet ;
l'envoi (220) des informations de paquet enregistrées pour le trafic réseau lié au client d'une couche réseau (413) à une couche hôte (420) à l'intérieur du noeud, la couche hôte comprenant l'une parmi : une couche de transport (414), une couche de session (415), une couche de présentation (416) et une couche d'application (417) ;
l'identification (230) de charges utiles au niveau application pour le trafic réseau lié au client au niveau de la couche hôte à l'intérieur du noeud ; et
la mise en corrélation (240) des informations de paquet avec les charges utiles au niveau application pour le trafic réseau lié au client, de sorte que des services dans une couche hôte que des paquets dans le trafic réseau desservent peuvent être déterminés.

2. Procédé selon la revendication 1, comprenant en outre la vérification à l'aide d'un système de facturation avant de permettre aux données d'être transmises au client ou à partir de celui-ci.

3. Procédé selon une quelconque revendication précédente, comprenant en outre la transmission (350) du résultat de corrélation à un système de facturation.

4. Procédé selon une quelconque revendication précédente, comprenant en outre la facturation (360) d'un compte d'utilisateur enregistré auprès du client pour le trafic réseau selon les charges utiles au niveau application transportées par le trafic réseau.

5. Noeud (510) dans un réseau de communication, le noeud (510) étant conçu pour :
faire office de passerelle entre un client et Internet (404) ;
enregistrer des informations de paquet pour le trafic réseau lié au client, les informations de paquet comportant des tuples TCP4, une séquence de démarrage TCP et la longueur de chaque paquet ;
transférer les informations de paquet enregistrées pour le trafic réseau lié au client d'une couche réseau (413) à une couche hôte (420) à l'intérieur du noeud (510), la couche hôte (420) comprenant l'une parmi : une couche de transport (414), une couche de session (415), une couche de présentation (416) et une couche d'application (417) ;
identifier des charges utiles au niveau application pour le trafic réseau lié au client au niveau de la couche hôte (420) à l'intérieur du noeud (510) ; et
mettre en corrélation des données de paquet de réseau avec des charges utiles au niveau application initiées par le client, de sorte que des services dans la couche hôte (420) que des paquets dans le trafic réseau desservent peuvent être déterminés.

6. Noeud (510) selon la revendication 5, comprenant en outre une liaison netfilter (514) pour enregistrer des informations de paquet pour le trafic client.

7. Noeud (510) selon la revendication 6, dans lequel les informations de paquet enregistrées sont traitées dans la couche hôte (420) du noeud (510), ledit traitement comprenant le tri d'informations de paquet appropriées pour une mise en corrélation avec les charges utiles au niveau application.

8. Noeud (510) selon l'une quelconque des revendications 5 à 7, comprenant en outre une entité de détection de trafic (550) pour identifier les charges utiles au niveau application dans le trafic réseau lié au client.

9. Noeud (510) selon la revendication 8, dans lequel l'entité de détection de trafic (550) interroge une entité de facturation pour déterminer s'il reste suffisamment de crédits ou de quotas sur un compte d'utilisateur associé au client avant de permettre la transmission des données au client.

10. Noeud (510) selon l'une quelconque des revendications 5 à 9, comprenant en outre la transmission du résultat de corrélation à un système de facturation.

11. Noeud (510) selon l'une quelconque des revendications 5 à 10, comprenant en outre le déclenchement d'un élément de facturation à enregistrer sur le compte d'utilisateur enregistré auprès du client, l'élément de facturation correspondant au volume de trafic réseau lié au client et aux charges utiles au niveau application transportées par le trafic réseau.
